# FASCICULE DE BREVET EUROPEEN

(11) **EP 1 481 896 B1**
(45) Date de publication et mention de la délivrance du brevet: **16.05.2007**
(21) Numéro de dépôt: 04291253.5
(22) Date de dépôt: 17.05.2004
(51) Int. Cl.: B64D 27/26

(54) **Dispositif d'accrochage avant de moteur d'avion**
Vorrichtung für die Frontaufhängung eines Triebwerkes an einem Luftfahrzeug
Frontal suspension device for an aircraft engine

(30) Priorité: 27.05.2003 FR 0306436
(43) Date de publication de la demande: 01.12.2004
(73) Titulaire: SNECMA, 75015 Paris (FR)
(72) Inventeur: Pasquer, Félix Jean-Claude, 77127 Lieusaint (FR); Loewenstein, Philippe, 76490 Saint Arnoult le Bourg (FR); Tesniere, Marc, 91750 Champcueil (FR)
(74) Mandataire: David, Daniel

(56) Documents cités:
- EP-A- 0 564 126
- EP-A- 0 741 074
- EP-A- 0 744 338
- EP-A- 1 031 507
- US-B1- 6 330 995

## Description

La présente invention concerne la suspension des moteurs de propulsion à la structure d'un avion. Elle concerne en particulier une suspension ou dispositif d'accrochage comprenant des moyens visant à maintenir la suspension en fonction en cas de rupture de l'une de ses pièces.

Un moteur de propulsion peut être monté à divers endroits de l'avion en étant accroché à un mât appartenant à la structure de ce dernier. Il peut être suspendu sous les ailes, fixé au fuselage ou monté dans l'empennage par des moyens d'accrochage. Ces moyens d'accrochage ont pour fonction d'assurer la transmission des efforts mécaniques entre le moteur et la structure de l'avion. Les charges à prendre en considération sont orientées selon les trois directions principales. Ce sont notamment le poids du moteur, sa poussée, et les charges aérodynamiques latérales. Les charges à transmettre comprennent aussi la reprise du couple de rotation autour de l'axe du moteur. Ces moyens doivent en outre absorber les déformations subies par le moteur pendant les différentes phases du vol en raison notamment des variations dimensionnelles dues aux dilatations ou contractions thermiques

Un mode de suspension, par exemple, dans le cas d'un turbomoteur à soufflante, consiste à accrocher le moteur à un mât appartenant à la structure de l'aile de l'avion par une suspension ou attache avant et une suspension ou attache arrière. La suspension avant est fixée en particulier sur le carter extérieur de la soufflante et la suspension arrière au carter d'échappement du flux primaire.

Selon une configuration connue, l'attache avant est agencée pour assurer la transmission des efforts mécaniques verticaux et tangentiels entre le moteur et l'avion. L'attache arrière est agencée pour assurer le passage des efforts mécaniques suivant ces mêmes directions, ainsi que la reprise du couple moteur autour de l'axe du turbomoteur et la reprise de poussée. Cette dernière est transmise par l'intermédiaire de deux barres de reprise de poussée accrochées, à l'avant, à la base du carter de soufflante de part et d'autre de l'axe longitudinal, et, à l'arrière, au moyen de suspension arrière du moteur.

La présente invention concerne une attache agencée pour transmettre les efforts verticaux et latéraux entre le moteur et le mât de l'avion. Il s'agit dans la configuration rappelée ci-dessus de l'attache avant.

Une attache de ce type comprend une ferrure dite supérieure, solidaire du mât de l'avion, une ferrure dite inférieure solidaire du carter du moteur et un jeu de bielles coopérant avec celles-ci. Par leur agencement, les bielles doivent permettre la transmission des efforts en traction et en compression le long de leur axe.

Les dispositifs d'accrochage intègrent, en cas de rupture de pièce, des moyens de sécurité visant à éviter que le moteur ne se détache de l'avion. On connaît par exemple des moyens, notamment, constitués d'éléments qui sont inactifs dans les conditions normales de fonctionnement du moteur, quand les pièces du dispositif d'accrochage sont intactes. Quand intervient la rupture de l'une de ces pièces, les moyens de sécurité deviennent actifs. Elles se substituent aux pièces défaillantes du dispositif d'accrochage.

On connaît par exemple un dispositif d'attache tel que décrit dans le brevet US 6330995. comprenant une première bielle et une seconde bielle entre les deux ferrures supérieure et inférieure. La première bielle est montée par un joint à rotule sur une oreille du moteur et par deux joints distincts à la ferrure supérieure dont l'un est à rotule et l'autre est axial. La seconde bielle est liée à une oreille du moteur par un joint à rotule et à la ferrure par un seul joint à rotule en fonctionnement normal. Un deuxième joint est prévu, mais l'axe de liaison est monté sur sa contrepartie avec un jeu. En fonctionnement normal, ce deuxième joint reste donc inactif. Le dispositif comprend une troisième bielle entre les deux ferrures qui reste en attente par la présence de jeux entre l'axe de liaison et leur logement respectif. En fonctionnement normal, la transmission des efforts est assurée par la première des bielles en raison de ses deux points de liaison avec la ferrure supérieure. La seconde bielle transmet les efforts de tension et de contraction en raison de son montage avec un seul joint.

En cas de rupture de la seconde bielle, les deux ferrures pivotent l'une par rapport à l'autre autour de la première bielle jusqu'à rattraper les jeux initiaux sur la troisième bielle. Cette dernière devient active et se substitue à la seconde bielle. En cas de rupture de la première bielle, les jeux de la seconde bielle sont rattrapés ainsi que le jeu de la troisième liaison de la seconde bielle. Là encore la suspension continue à remplir sa fonction sans altération de ses performances.

On observe que les première et seconde bielles sont en forme de boomerang et présentent une certaine symétrie. Elles ne sont pas cependant interchangeables car un des axes de la seconde bielle est monté avec jeu alors que les trois axes sont actifs dans la première.

Avec ce type d'agencement, on est amené à usiner des pièces spécifiques. Chaque bielle a une position unique dans la suspension. Il y a donc autant de références que de pièces constituant le dispositif d'accrochage. Cela ne contribue pas à des économies de fabrication et de gestion optimales.

Les documents EP 1 031 507, EP 0 744 338 et EP 0 741 074 portent chacun sur une attache arrière dans une suspension de turboréacteur.

En outre, les deux bielles principales sont de formes quasi identiques. Au montage le technicien doit respecter un mode opératoire très précis, et procéder avec une grande attention. Le risque d'erreur n'est pas négligeable.

La demanderesse s'est fixé comme objectif la réalisation d'un dispositif d'accrochage de moteur à la structure de l'avion dont les risques d'erreur au montage sont réduits.

Elle s'est également fixé pour objectif la réalisation d'un dispositif comportant des pièces interchangeables. Il serait ainsi possible de réaliser le montage avec un nombre plus faible de pièces différentes. Non seulement on réduirait le risque d'erreur mais aussi les coûts de fabrication, d'entretien et de gestion des stocks de pièces.

L'invention réalise ces objectifs avec un dispositif d'accrochage d'un turbomoteur au mât d'un avion formant l'attache avant dans un système de montage avec attache avant, attache arrière et reprise de poussée par bielles comprenant une ferrure supérieure pourvue de moyens de fixation rigide au mât, une première et une deuxième bielles reliées chacune au moteur d'une part par une première liaison à articulation et à la ferrure d'autre part par une deuxième liaison à articulation, caractérisé par le fait que les deux bielles sont interchangeables et que chacune, des bielles comporte une troisième liaison en attente reliant la bielle soit au moteur, soit à la ferrure.

En particulier, au moins l'une des deux liaisons en attente est réalisée par une liaison à articulation avec un axe d'articulation monté avec jeu dans son logement. Notamment, chaque liaison en attente est une liaison à articulation avec un axe d'articulation monté avec jeu dans son logement, les deux jeux étant identiques.

De préférence les première et deuxième bielles sont identiques. En particulier, les bielles ont une forme incurvée, les trois liaisons formant un angle entre elles.

L'invention sera mieux comprise à la lecture de la description qui suit accompagnée des dessins en annexe sur lesquels
la figure 1 représente une vue générale du montage d'un moteur au mât d'un avion
la figure 2 représente en perspective le dispositif de montage du moteur conforme à l'invention.
La figure 3 représente le dispositif de la figure 2 en vue éclatée,
La figure 4 représente un deuxième mode de réalisation de l'invention vu en perspective.
La figure 5 représente une bielle vue de face avec les différentes articulations.

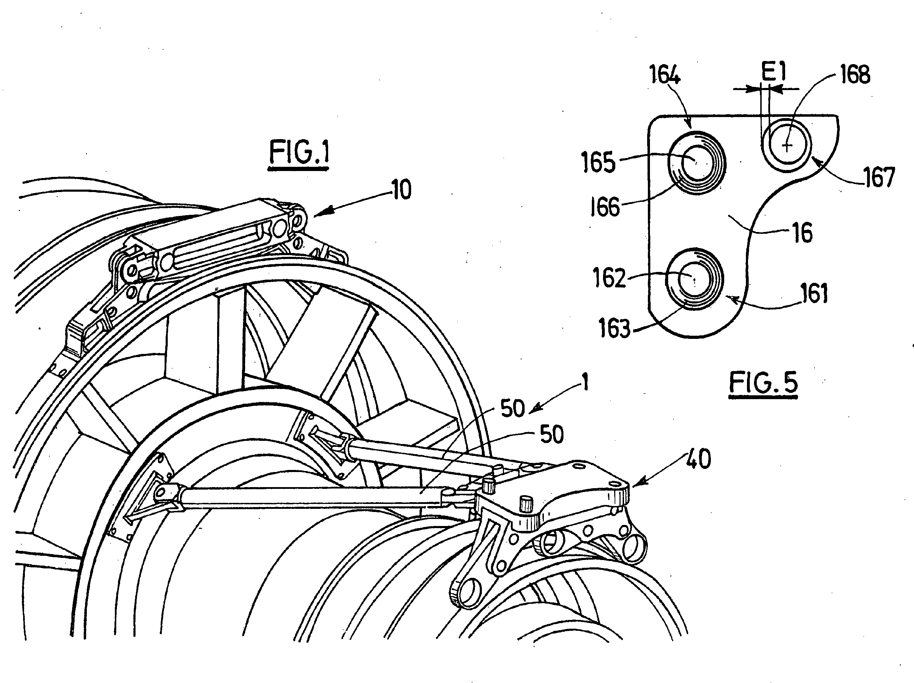

La figure 1 représente, vu de trois-quarts arrière, un turboréacteur 1 équipé de ses moyens d'accrochage à un mât d'avion qui n'est pas représenté. Selon ce mode de suspension, courant maintenant, le moteur comprend un dispositif d'attache 10 à l'avant du moteur, fixé sur le carter extérieur de la soufflante. Il comporte aussi un moyen d'attache 40 à l'arrière, fixé au carter d'échappement du flux primaire. La reprise de la poussée est assurée par deux bielles 50 accrochées par une extrémité à la base du carter de la soufflante et par l'autre à l'attache arrière 40

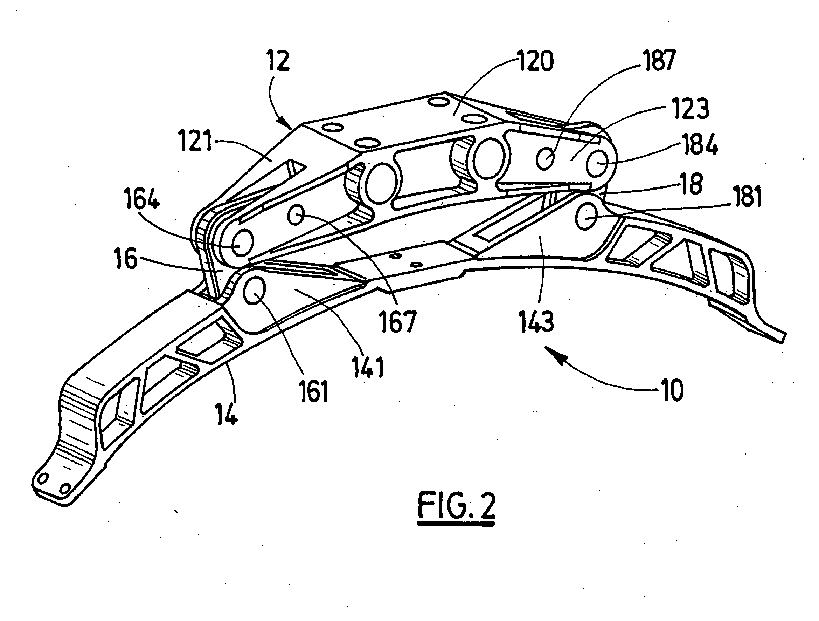

La présente invention concerne l'attache avant 10 que l'on décrit ci-après en relation avec les figures 2, 3 et 5. L'attache 10 est composée d'une ferrure 12 supérieure, d'une ferrure inférieure 14 et de deux bielles articulées 16 et 18 reliant la ferrure inférieure à la ferrure supérieure.

La ferrure supérieure est constituée d'une poutre 120 avec, ici, quatre logements pour le passage de boulons avec lesquels on rend la ferrure solidaire du mât de l'avion. La poutre se prolonge, de part et d'autre, dans le sens transversal par rapport à l'axe du moteur, par deux chapes doubles, 121 et 123 respectivement.

La ferrure inférieure 14 dont la forme est adaptée pour être soudée ou rivetée au carter de la soufflante, dans le sens périphérique comprend deux chapes 141 et 143 en vis à vis des chapes de la ferrure supérieure.

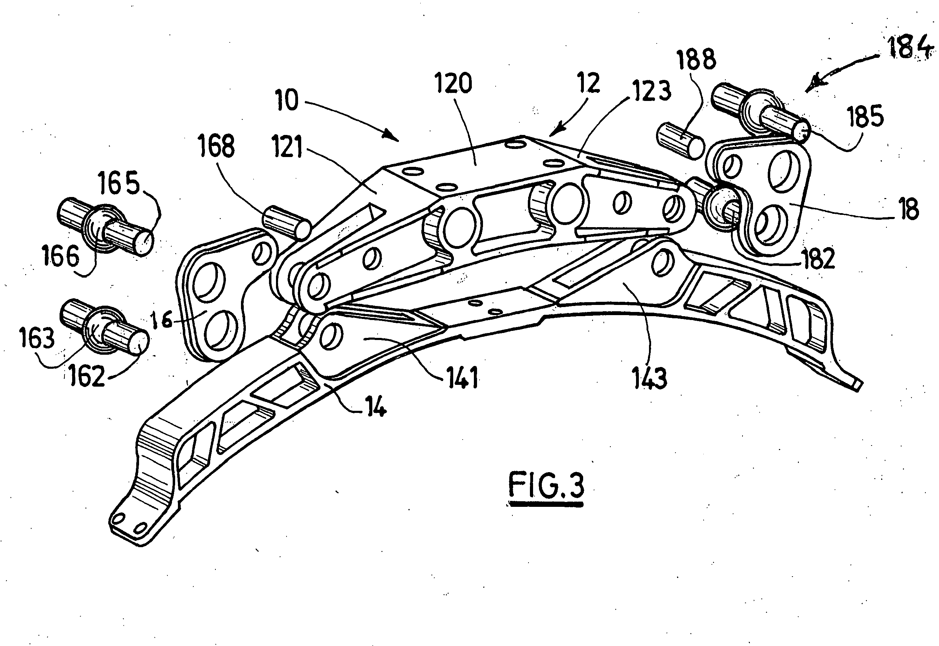

Les deux ferrures sont liées entre elles par les deux bielles 16 et 18 au moyen de liaisons formant des articulations comme on le voit dans la vue éclatée de la figure 3.

La bielle 16 par exemple est reliée à la chape 141 par une première liaison de préférence à rotule 161 avec un axe 162. Les liaisons à rotule sont bien connues dans le domaine. Par exemple, elle comprend un axe 162 monté dans une douille 163 à surface extérieure sphérique, elle-même maintenue dans un logement de la bielle. L'axe 162 est monté à rotation dans les logements correspondant ménagés dans les oreilles de la chape 141.

La liaison à rotule permet une rotation à la fois autour de l'axe 162 et autour des deux directions qui lui sont perpendiculaires. Elle présente la particularité de ne transmettre que les efforts en traction et en compression par l'axe 162.

La bielle 16 est liée à la chape 121 par une deuxième liaison, également de préférence à rotule 164, qui, comme la première, comprend un axe 165 et une douille sphérique 166. L'axe 165 est monté à rotation dans des logements ménagés dans la chape 121.

Conformément à l'invention, la bielle 16 est reliée à la chape 121 par une troisième liaison 167 qui est en attente. Par ce terme, on désigne une liaison qui en fonctionnement normal reste inactive ; elle ne transmet aucune force. Elle devient active et transmet des efforts en cas de rupture de pièces déterminées de l'attache. Comme le voit plus précisément sur la figure 5, on réalise une telle liaison, par exemple, au moyen d'un axe 168 traversant la bielle 16 et la chape 121. L'axe 168 est monté avec un jeu radial E1 dans un logement sur la bielle 16.

Comme on le voit sur la figure 3 ou la figure 5, la bielle 16 n'est pas rectiligne ; elle a une forme qui ressemble à celle d'un boomerang. Les trois moyens de liaison ne sont pas alignés.

La bielle 18 comporte, comme la bielle 16, une première liaison 181 à rotule et axe 182 avec la chape 143. Elle est reliée par une deuxième liaison à rotule 184 et axe 185 à la chape 123. Elle comprend également une liaison en attente 187 avec la chape 123. Cette liaison est de préférence réalisée comme dans la chape 121 au moyen d'un axe 188 monté avec un jeu radial défini E2 dans des logements alignés sur la chape et la bielle.

Avantageusement les jeux E1 et E2 sont identiques. En outre, en raison de la symétrie de la structure et des moyens constituant l'attache, les deux bielles sont de préférence interchangeables.

On décrit ci-après le mode de fonctionnement du dispositif qui vient d'être décrit.

En fonctionnement normal, les efforts situés dans le plan perpendiculaire à l'axe du moteur, c'est à dire des efforts ayant une composante verticale et/ou latérale, sont transmis du moteur au mât successivement par la ferrure inférieure, les premiers et deuxièmes moyens de liaison et la ferrure supérieure. Les deux liaisons en attente sont inactives.

Dans l'hypothèse où la bielle 16 par exemple vient à rompre, il se produit un basculement entre les deux ferrures autour de la bielle 18 jusqu'à ce que le jeu radial de la troisième liaison 187 ait disparu. Ce déplacement se produit aussi en cas de défaillance d'une autre pièce située dans la trajectoire des efforts passant par la bielle 16, telle que la poutre de la ferrure supérieure, une oreille de la chape 141 ou bien une liaison à rotule.

La liaison entre les deux ferrures devient alors rigide. Cette liaison assure la transmission à la fois des efforts verticaux et/ou latéraux.

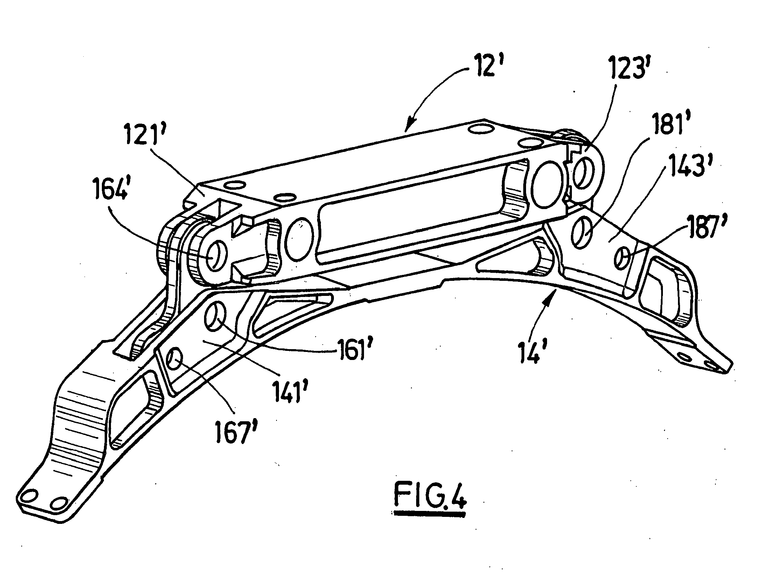

On a représenté sur la figure 4, un second mode de réalisation. Il diffère du premier mode par l'inversion des troisièmes liaisons. On reprend les mêmes références pour les moyens correspondant en prime. Les deux ferrures 12' et 14' sont modifiées de telle façon que les troisièmes liaisons 167' et 187' avec leur axe respectif 168' et 188' soient ménagées sur la ferrure inférieure 14'. Les chapes 141' et 143' comprennent donc des logements pour les premières liaisons 161' et 181', ainsi que pour les troisièmes liaisons. Les chapes 121' et 123' sont agencées pour recevoir les deuxièmes liaisons. Le bielles reliant les chapes de la ferrure supérieure à la ferrure inférieure ont la même forme que dans le premier mode de réalisation. Elles sont simplement inversées. En reportant les troisièmes liaisons sur le moteur, on peut réduire la taille des chapes 121' et 123', rendre la structure du dispositif d'accrochage plus compact et diminuer son encombrement.

## Revendications

1. Dispositif d'accrochage d'un turbomoteur (1) au mât d'un avion formant l'attache avant dans un système de montage avec attache avant, attache arrière et reprise de poussée par bielles comprenant une ferrure supérieure (12, 12') pourvue de moyens de fixation rigide au mât, une première (16) et une deuxième (18) bielles, chaque bielle (16, 18) comportant une première liaison à articulation (161, 181 ; 161', 181') reliant la bielle (16, 18) au moteur d'une part et une deuxième liaison à articulation (165, 185 ; 165', 185') reliant la bielle (16, 18) à la ferrure (12, 12') d'autre part, **caractérisé par le fait que** les deux bielles sont interchangeables et que chacune des bielles (16, 18) comporte une troisième liaison (167,187; 167',187') en attente reliant la bielle (16, 18) soit au moteur, soit à la ferrure (12, 12').

2. Dispositif selon la revendication 1 dont au moins l'une des deux liaisons (167,187 ; 167',187') en attente est réalisée par une liaison à articulation avec un axe d'articulation monté avec jeu dans son logement.

3. Dispositif selon la revendication 2 dont chaque liaison en attente est une liaison à articulation avec un axe d'articulation (168, 188 ; 168',188') monté avec jeu dans son logement, les deux jeux étant identiques.

4. Dispositif selon l'une des revendications précédentes dont les première et deuxième bielles (16, 18) sont identiques.

5. Dispositif selon l'une des revendications précédentes dont les bielles ont une forme incurvée, les trois liaisons formant un angle entre elles.

## Claims

1. Device for coupling a turbine engine (1) to the pylon of an aircraft forming the front attachment in a mounting system with front attachment, rear attachment and uptake of thrust via connecting rods comprising a top fitting (12, 12') provided with means for rigid attachment to the pylon, a first connecting rod (16) and a second connecting rod (18), each connecting rod (16, 18) comprising a first articulated connection (161, 181; 161', 181') linking the connecting rod (16, 18) to the engine on the one hand and a second articulated connection (165, 185; 165', 185') linking the connecting rod (16, 18) to the fitting (12, 12') on the other hand, **characterized in that** the two connecting rods are interchangeable and that each of the connecting rods (16, 18) comprises a third connection (167, 187; 167', 187') in readiness linking the connecting rod (16, 18) either to the engine or to the fitting (12, 12').

2. Device according to Claim 1 whereof at least one of the two connections (167, 187; 167', 187') in readiness is achieved by an articulated connection with an articulation shaft mounted with clearance in its housing.

3. Device according to Claim 2, whereof each connection in readiness is an articulated connection with an articulation shaft (168, 188; 168', 188') mounted with clearance in its housing, the two clearances being identical.

4. Device according to one of the preceding claims, whereof the first and second connecting rods (16, 18) are identical.

5. Device according to one of the preceding claims, whereof the connecting rods have a curved shape, the three connections forming an angle between them.

## Patentansprüche

1. Aufhängungsvorrichtung für einen Turbomotor (1) an einem Stiel eines Flugzeugs, der die vordere Befestigung eines Montagesystems mit vorderer Befestigung, hinterer Befestigung und Schubaufnahme durch Stangen bildet, und die ein oberes Band (12, 12') aufweist, das mit starren Befestigungsmitteln zur Befestigung an dem Stiel versehen ist, eine erste (16) und eine zweite (18) Pleuelstange aufweist, wobei jede Pleuelstange (16, 18) einerseits eine erste Gelenkverbindung (161, 181; 161', 181') enthält, die die Pleuelstange (16, 18) mit dem Motor verbindet, und andererseits eine zweite Gelenkverbindung (165, 185; 165', 185') enthält, die die Pleuelstange (16, 18) mit dem Band (12, 12') verbindet,
**dadurch gekennzeichnet,**
**dass** die beiden Pleuelstangen untereinander austauschbar sind und dass jede der Pleuelstangen (16, 18) eine dritte Verbindung (167, 187; 167', 187') in Wartestellung aufweist, die die Pleuelstange (16, 18) entweder mit dem Motor oder mit dem Band (12, 12') verbindet.

2. Vorrichtung nach Anspruch 1, bei der mindestens eine der beiden Verbindungen (167, 187; 167', 187') in Wartestellung von einer Gelenkverbindung mit einer Gelenkachse, die mit Spiel in ihrer Aufnahme sitzt, gebildet wird.

3. Vorrichtung nach Anspruch 2, bei der jede Verbindung in Wartestellung eine Gelenkverbindung mit einer Gelenkachse (168, 188; 168', 188'), die mit Spiel in ihrer Aufnahme sitzt, ist, wobei die beiden Spiele identisch ausgeführt sind.

4. Vorrichtung nach einem der vorherigen Ansprüche, bei der die erste und die zweite Pleuelstange (16, 18) identisch ausgeführt sind.

5. Vorrichtung nach einem der vorherigen Ansprüche, bei der die Pleuelstangen eine gebogene Form aufweisen, wobei die drei Verbindungen zueinander einen Winkel bilden.
